Europäisches Patentamt

European Patent Office

Office européen des brevets

(11) Veröffentlichungsnummer: **0 322 539**

**A1**

(12) # EUROPÄISCHE PATENTANMELDUNG

(21) Anmeldenummer: **88118061.6**

(22) Anmeldetag: **29.10.88**

(51) Int. Cl.4: **B65G 1/04**

(30) Priorität: **24.12.87 DE 3744217**

(43) Veröffentlichungstag der Anmeldung:
**05.07.89 Patentblatt 89/27**

(84) Benannte Vertragsstaaten:
**BE DE FR IT NL**

(71) Anmelder: **HCR-HEINRICH CREMER GMBH**
**Oppelner Strasse 37**
**D-4050 Mönchengladbach 3(DE)**

(72) Erfinder: **Cremer, Heinrich**
**Eisvogelweg 22**
**D-4050 Mönchengladbach 4(DE)**
Erfinder: **Cremer, Klaus**
**Rosenweg 3**
**D-4050 Mönchengladbach 4(DE)**
Erfinder: **Synofzik, Reinhard, Dr.**
**Am Ringofen 7**
**D-4053 Jüchen 1(DE)**
Erfinder: **Wirtz, Karl-Hans**
**Wiesenstrasse 10**
**D-5177 Titz-Hasselsweiler(DE)**

(74) Vertreter: **Wangemann, Horst, Dipl.-Ing.**
**Stresemannstrasse 28**
**D-4000 Düsseldorf 1(DE)**

(54) **Plattenlager mit mindestens einem Plattenregal mit im Abstand zueinander angeordneten Tragarmen.**

(57) Die Erfindung betrifft ein Plattenlager mit mindestens einem Plattenregal (1, 1a, 1b, 10, 11, 13, 14) mit aufeinander gestapelte Platten tragenden Tragarmreihen (I - V) aus parallelen im Abstand auf gleicher Höhe und senkrecht übereinander angeordneten Tragarmen (5) und mit einem vor dem Regal parallel zu dessen Längsmittelachse verfahrbaren Gabellift (2 - 2f). -Es soll ein Plattenlager geschaffen werden, das bei guter Zugänglichkeit zu dem Regal einen geringen Raum in Anspruch nimmt und sowohl das Lagern und Befördern von Plattenpaketen wie auch von Einzelplatten mit konstruktiv gering aufwendigen und einfach zu handhabenden Mitteln möglich macht. - Hierzu ist vorgesehen, daß die Tragarme (5) der Armreihen (I - V) an der dem Gabellift (2 - 2f) abgekehrten Regalseite fliegend gehalten sind, der Gabellift unmittelbar vor dem Regal verfahrbar ist und an einem Ende oder in der Mitte des Regals in dessen Längsmittelachse (M) ein Plattenübergabeplatz (3) angeordnet ist.

Fig. 7

## Plattenlager mit mindestens einem Plattenregal mit im Abstand zueinander angeordneten Tragarmen

Die Erfindung betrifft ein Plattenlager mit mindestens einem Plattenregal nach dem Oberbegriff des Anspruchs 1, das parallele, im Abstand übereinander angeordnete Tragarme zum Lagern der Platten aufweist.

Durch die DE-A-31 11 943 ist ein automatisiertes Materiallager mit Regalbediengerät bekannt. Hierbei ist vor mehreren nebeneinander angeordneten Regalen in deren Längsrichtung ein Regalentladungsgerät vorgesehen, wobei der Verfahrweg dieses Gerätes der Regalreihe abgekehrt vorgesehen ist und am Ende des Verfahrweges ein Aufnahme- und Abgabeplatz angeordnet ist. - Durch die DE-U-1 881 986 ist ein Stapelkran mit verschiebbarem Führerstand bekannt. Hier sind mehrere Regale nebeneinander angeordnet, wobei zwischen zwei sich gegenüberliegenden parallelen Regalen ein Zwischenraum oder eine Gasse vorgesehen ist, zwischen der ein Lastträger verfahrbar ist. - Letztlich ist ein Lager- und Bereitstellsystem für Bleche, Coils und andere Güter in Anwendung und durch einen Prospekt der Firma Neuhäuser GmbH & Co., D-4670 Lünen/BR Deutschland bekannt, bei dem vor mehreren nebeneinander angeordneten Einzelregalen ein Gabellift längsverfahrbar ist. Bei einer Ausführungsform diese Systems ist zwischen den Regalen und dem Gabellift eine Fahrbahn für die Platten vorgesehen. Bei dieser Ausführungsform, wie bei einer zweiten Ausführungsform, bei der der Gabellift unmittelbar an den Regalen vorbeifährt, ist ein Platten befördernder Übergabewagen auf einer Fahrbahn jenseits des Gabelliftes verfahrbar. Die Platten werden innerhalb jedes Regals mittels des Gabellifts auf Höhe des Materialübergabewagens bewegt und dann quer zur Regallängsrichtung von oder auf den Wagen verschoben. Eine solche Ausführungsform bedingt einen zusätzlichen Verfahrweg des Materialübergabewagens vor jedem Regal oder jeder Regalreihe und ferner eine Einrichtung, mit welcher die Platten aus den Regalen auf die Übergabewagen gebracht werden, so daß der Gabellift insgesamt Bewegungen der Platten in drei senkrecht zueinander stehenden Ebenen ausführen kann. - Dieses bekannte System ist nur für Plattenstapel oder Plattenkassetten geeignet.

Diesem Stand der Technik gegenüber besteht die Aufgabe der Erfindung darin, ein Plattenregal mit den Merkmalen des Gattungsbegriffes des Anspruches 1 zu schaffen, das bei guter Zugänglichkeit zu dem Regal einen geringen Raum in Anspruch nimmt und sowohl das Lagern und Befördern von Plattenpaketen wie auch von Einzelplatten mit konstruktiv gering aufwendigen und einfach zu handhabenden Mitteln möglich macht. - Wenn hier vor- und nachstehend von einem Regal gesprochen wird, so ist hierunter auch eine Regalreihe aus mehreren gleichartigen nebeneinander angeordneten Einzelregalen zu verstehen.

Zur Lösung dieser Aufgabe sieht die Erfindung die Merkmale des Hauptanspruchs vor. - Die Merkmale der Unteransprüche dienen der Verbesserung und Weiterentwicklung der Merkmale des Hauptanspruches.

Auf der Zeichnung sind Ausführungsbeispiele des erfindungsgemäßen Plattenregals dargestellt und zwar zeigt

Fig. 1 in Draufsicht den Aufbau einer ersten Ausführungsform,

Fig. 2 eine zweite Ausführungsform des Plattenregals nach der Erfindung,

Fig. 3 in Draufsicht eine weitere Ausbildungsmöglichkeit des Plattenregals,

Fig. 4 ein Beispiel für einen Plattenübergabeplatz,

Fig. 5 und 6 den Gabelteil des Gabellifts,

Fig. 7 bis 9 verschiedene Schnitte durch ein Regal.

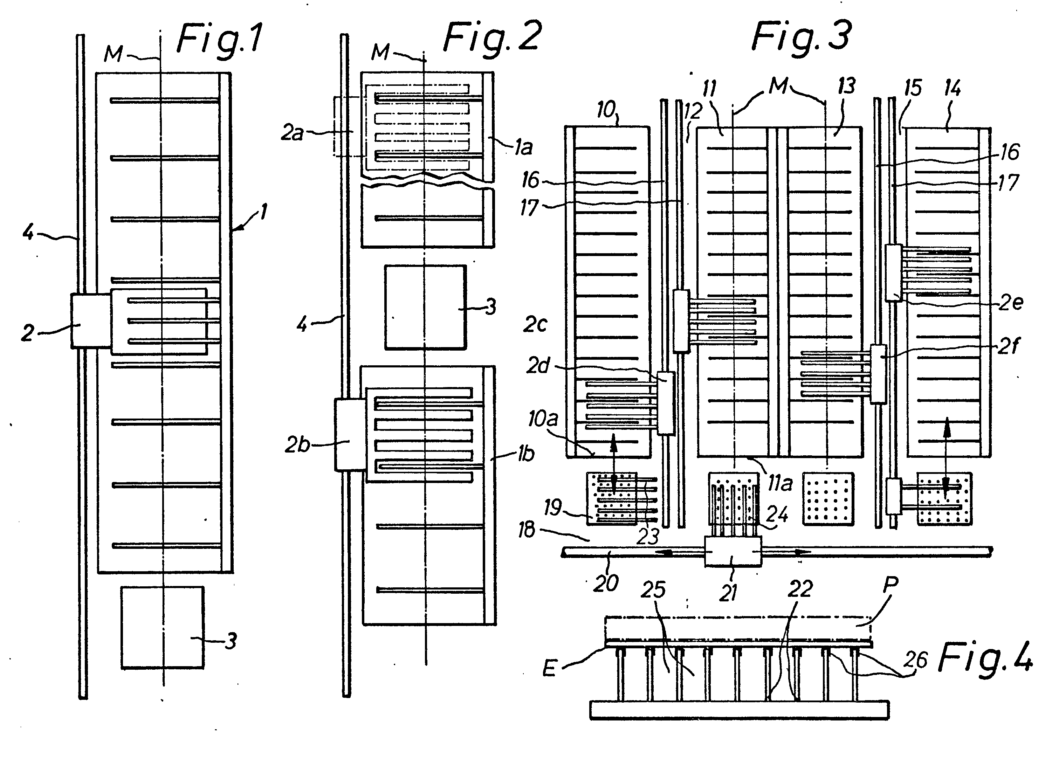

Das erfindungsgemäße Plattenlager besteht im wesentlichen aus dem Plattenregal 1, dem Gabellift 2 und einem Plattenübergabeplatz 3. Dieser ist, wie in Fig. 1 dargestellt ist, in der Längsmittelachse M des Regals an dessen Ende angeordnet. Der Plattenübergabeplatz 3 kann jedoch auch, wie dies Fig. 2 verdeutlicht, in der Mitte zwischen zwei Einzelregalen 1a und 1b angeordnet sein.

Jeweils vor - in den Fig. 1 und 2 links neben - dem Regal 1 bzw. den Einzelregalen 1a, 1b, die in ihrer Gesamtheit ein Regal bilden, ist parallel zur Längsmittelachse M eine Führungsschiene 4 für den Gabellift 2 angeordnet. Auf dieser Führungsschiene können je nach Länge des Regals, wie in Fig. 2 angedeutet, zwei Gabellifte 2a und 2b verfahren werden, die jeweils einen Regalabschnitt 1a, 1b bedienen.

Fig. 3 zeigt die Möglichkeit einer Platzeinsparung bei Anwendung des erfindungsgemäßen Plattenlagers, wobei einerseits zwei Plattenregale 10, 11 einander gegenüberliegend unter Bildung eines Zwischenraumes 12 angeordnet sind, andererseits zwei Regale, wie die Regale 11 und 13 in Fig. 3 mit ihrer Rückseite nahe beieinander oder aneinander liegend vorgesehen werden können. Hierbei kann dem Regal 13 wiederum gegenüberliegend ein weiteres Regal 14 unter Bildung eines Zwischenraumes 15 angeordnet werden.

In den Zwischenräumen 12 und 15 sind jeweils zwei Führungsschienen 16, 17 angeordnet, auf denen entsprechende Gabellifte 2c - 2f verfahrbar sind. Hier besteht die Möglichkeit, in jedem Zwischenraum 12, 15 nur eine Führungsschiene zu verlegen und auf dieser, ähnlich der Anordnung nach Fig. 2 zwei Gabellifte verfahren zu lassen. Auch besteht die Möglichkeit, bei Anwendung nur einer Führungsschiene einen zweiseitig wirksamen Gabellift zu verwenden, d. h. einen Gabellift, der sowohl die Regale 10, 11 einerseits und 13, 14 andererseits zu bedienen vermag. - Die Wahl einer der vorstehend beschriebenen Ausführungsformen hängt von den an das Lager gestellten Anforderungen ab.

Am Ende jedes der Regale 10, 11, 13, 14 ist wiederum je ein Plattenübergabeplatz 18 vorgesehen, auf dem ein Auflagetisch 19 angeordnet ist. Bei der in Fig. 3 vorteilhaften Ausbildung des Plattenlagers erstreckt sich senkrecht zur Längsmittelachse M der Regale 10, 11 und 13, 14 an deren Ende 10a, 11a eine Fahrbahn 20. Aufdieser ist ein Gabelstapler 21 verfahrbar, der Plattenstapel bzw. Einzelplatten von bzw. zu diesen Tischen 19 ab- bzw. umfördern kann. Die Tische 19 bestehen aus senkrechten Stützstäben 22, die senkrecht zueinander gerichtete Gassen 25 entstehen lassen, so daß die Gabeln 23 des bzw. der Gabellifte 2c - 2f und die hierzu senkrecht gerichteten Arme 24 des Gabelstaplers 21 in die Zwischenräume 25 zwischen den Stützstäben 22 fahren können.

Hierdurch vermögen der Gabellift 2 wie auch der Gabelstapler 21 auf den Stützstäben 22 liegende Einzelplatten E wie Plattenpakete P anzuheben bzw. auf den Stützstäben abzulegen, die vorzugsweise mit einer elastisch verformbaren Kappe 26 zum Schutz der Plattenoberfläche und zum Ausgleich von Plattenunebenheiten vorgesehen sind.

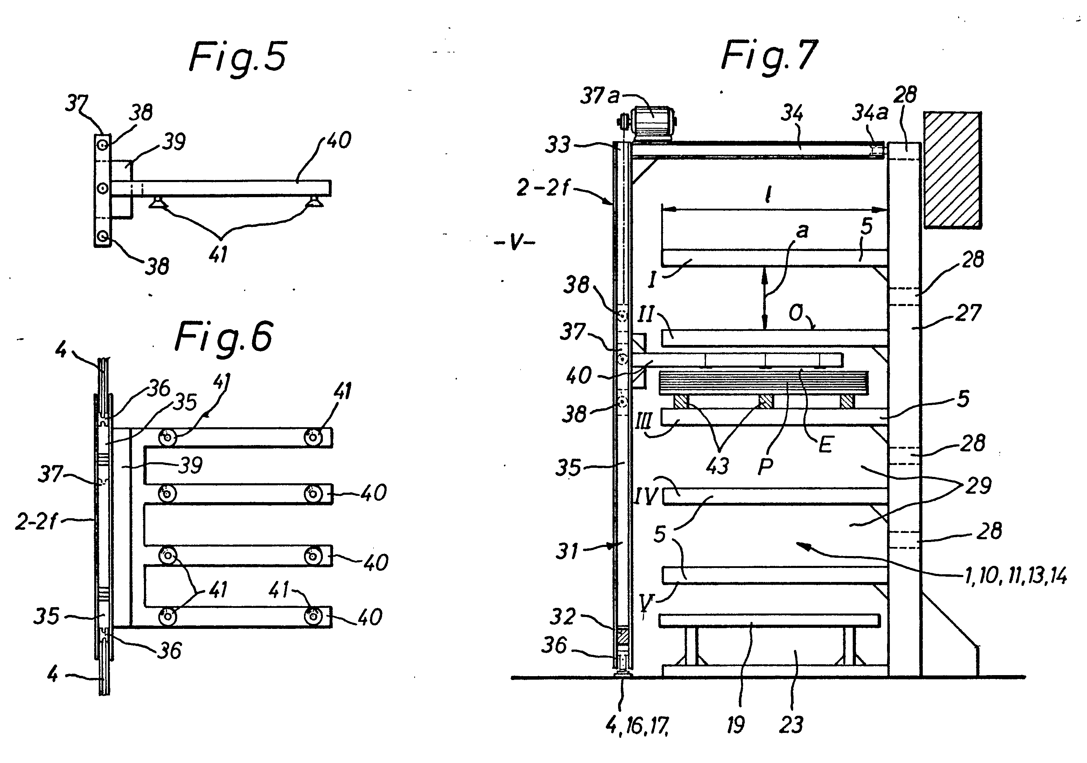

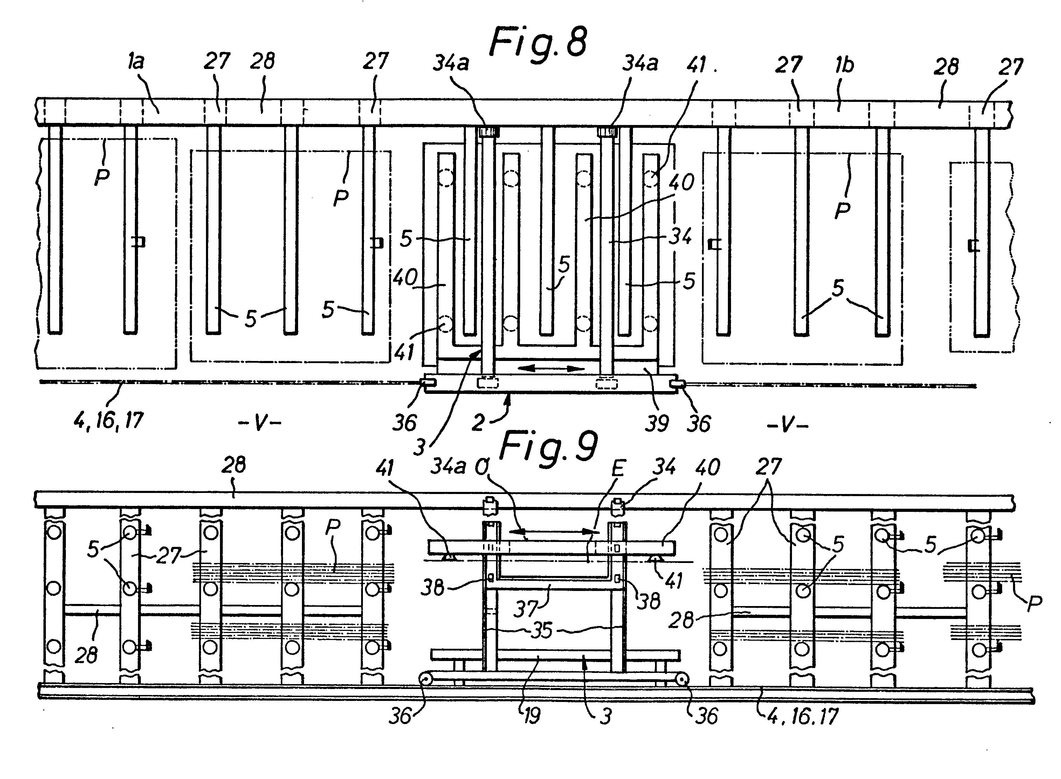

Wie die Fig. 7 bis 9 erkennen lassen, besteht das Plattenregal 1 bzw. die Plattenregale 1a, 1b und 10, 11 sowie 13 und 14 aus einer der Länge des Regals entsprechenden Anzahl von Stützsäulen 27. Die in Längsrichtung aufeinanderfolgenden Stützsäulen des Regals können durch Längstraversen 28 miteinander verbunden sein. Bei der Ausführungsform nach Fig. 3, bei der in der Mitte zwischen den Regalen 10 und 14 zwei Regale 11, 13 mit ihrer Rückseite einander zugekehrt sind, können die Stützsäulen 27 der Regale 11, 13 miteinander verbunden sein oder es kann eine entsprechend stark dimensionierte gemeinsame Stützsäule für die beiden Regale vorgesehen werden.

An jeder Stützsäule 27 sind gegen die Vorderseite V des Regals (Fig. 7) hin gerichtete Tragarme 5 fliegend angeordnet. Hierdurch werden durch die auf gleicher Höhe gelegenen Tragarme 5 der Stützsäulen 27 horizontale Reihen I, II, III, IV und V von Tragarmen mit Zwischenräumen 29 gebildet, wobei der Abstand zweier Reihen (z. B. I und II in Fig. 7) a ist. Die freie fliegende Länge der Tragarme beträgt 1. Da die Tragarme der Reihen I bis V auch noch vertikal fluchtend angeordnet sind, entstehen auch vertikale Gassen 30.

Der Tisch 19 des Plattenübergabeplatzes 3 ist in einer Höhe unterhalb der untersten Armreihe V angeordnet.

Der zur Anwendung gelangende und auf den Führungsschienen 2, 16 und 17 verfahrbare Gabellift 2 - 2f wird gebildet durch einen senkrechten Rahmen 31 mit einer unteren und oberen Traverse 32, 33 und zwei zueinander parallelen senkrechten Rahmenstreben 35. Der Rahmen 31 des Gabelliftes ist mit Hilfe von Rollen 36 auf den Führungsschienen 2 und 16, 17 vor den Regalen verfahrbar und kann sich über Horizontalstreben 34 mit Rollen 34a an der obersten Längstraverse 28 des Regals abstützen. - An der Innenseite der senkrechten Rahmenstreben 34, 35 ist ein weiterer kleiner Rahmen 37 - und durch einen Motor 37a mit Hilfe von Rollen 38 geführt. Dieser Rahmen trägt heb- und senkbar einen Stützteil 39, an dem Liftarme 40 in einer Weise fliegend angeordnet sind, daß diese Arme in den senkrechten Gassen 30 der Tragarme höhenverfahrbar sind. Die Gabelliftarme 40 tragen an ihrer Unterseite mehrere Elemente zum Anheben und Fördern einer Einzelplatte. Ein solches Element kann ein Sauger sein, der mit der Bezugsziffer 41 versehen ist.

Die Anordnung der Sauger 41 ist derart getroffen, daß die Einzelplatten, die mit Hilfe dieser Sauger, wie untenstehend noch erläutert wird, angehoben werden, gleichmäßig erfaßt werden können.

Der Abstand a zwischen den horizontalen Tragarmreihen I, II, III usw. ist derart getroffen, daß die Liftarme 40 den den Zwischenraum 29 unterhalb eines Tragarmes 5 ein auf dem darunter befindlichen Tragarm liegendes Plattenpaket P anheben können, selbst wenn dieser auf Unterlagen 43 aufliegt, und dieser Plattenstapel in Längsrichtung durch das Regal bis zu dem Platz 3 und umgekehrt bewegt werden kann.

Wie aus Vorstehendem erkennbar ist, vermag der Gabellift ein Plattenpaket P von dem Plattenübergabeplatz 2 zunächst auf den Zwischenraum zwischen einer Tragarmreihe I, II, III usw. anzuheben. Hiernach verfährt der Gabellift das Paket 42 über den Tisch 19 am Übergabeplatz 3 horizontal durch das Regal oberhalb der jeweiligen Reihe I, II, III ... der fliegend angeordneten Tragarme 5 und senkt das Paket 42 auf den Tisch 19 ab. Umgekehrt erfaßt der Gabellift ein Paket P auf dem Tisch 19, hebt dieses bis auf die Höhe der ausgewählten Reihe I, II, III fährt durch den entsprechenden Zwischenraum 29 bis auf Höhe des gewünschten Regals und senkt das Paket auf dessen Tragarme 5 ab. Bei diesen Operationen liegt das Plattenpaket P auf der Oberseite O (Fig.5) der Liftarme 40 auf. - Gilt es, eine Einzelplatte E von einem der auf den Tragarmen 5 lagernden Plattenpakete P abzunehmen, um diese Einzelplatte E dem Regal zu entnehmen, so werden die Gabelliftarme 40 in eine Position gebracht, in der nunmehr der Sauger 41 die oberste Platte als Einzelplatte E des Plattenpaketes P erfaßt und die Platte auf umgekehrtem Wege zu dem Übergabeplatz 3 befördert. Mit entsprechenden Mitteln vollzieht sich dieser Vorgang in zeit- und arbeitsparender Weise, die Überwachungsmittel einschließen, die die Lage der Pakete P und/oder der Einzelplatten E kontrollieren.

Der Übergabeplatz 3 kann eine Plattenwendeeinrichtung aufweisen, mit deren Hilfe die Einzelplatte derart gewendet werden kann, daß die Plattenunterseite zu oberst gelangt.

**Ansprüche**

1. Plattenlager mit mindestens einem Plattenregal (1, 1a, 1b, 10, 11, 13, 14) mit aufeinander gestapelte Platten tragenden Tragarmreihen (I - V) aus parallelen im Abstand auf gleicher Höhe und senkrecht übereinander angeordneten Tragarmen (5) und mit einem vor dem Regal parallel zu dessen Längsmittelachse verfahrbaren Gabellift (2 - 2f), dadurch gekennzeichnet, daß die Tragarme (5) der Armreihen (I - V) an der dem Gabellift (2 - 2f) abgekehrten Regalseite fliegend gehalten sind, der Gabellift unmittelbar vor dem Regal verfahrbar ist und an einem Ende oder in der Mitte des Regals in dessen Längsmittelachse (M) ein Plattenübergabeplatz (3) angeordnet ist.

2. Plattenregal nach Anspruch 1, dadurch gekennzeichnet, daß die Unterseite der auf ihrer Oberseite (O) ein Plattenpaket (P) tragenden Gabelliftarm (40) Einzelplatten (E) erfassende und tragende Elemente (41) aufweisen.

3. Plattenlager nach Anspruch 1, dadurch gekennzeichnet, daß zwei Regale (10, 11; 13, 14) mit ihrer Vorderseite unter Bildung eines schmalen Zwischenraumes (12, 15) einander zugekehrt sind und in dem Zwischenraum ein jedem Regal zugeordneter Gabellift (2c, 2d; 2e, 2f) angeordnet ist.

4. Plattenregal nach Anspruch 1, dadurch gekennzeichnet, daß zwei Regale mit ihrer Vorderseite unter Bildung eines schmalen Zwischenraumes einander zugekehrt sind und in dem Zwischneraum ein einziger zweiarmiger, beide Regale bedienender Gabellift angeordnet ist.

5. Plattenregal nach Anspruch 1 und einem der Ansprüche 2 oder 3, dadurch gekennzeichnet, daß der Plattenübergabeplatz (3) einen Gabeltische (19) aufweist.

6. Plattenregal nach Anspruch 1 und einem der Ansprüche 2 bis 5, dadurch gekennzeichnet, daß der Plattenübergebeplatz (3) einen Auflagetisch aus in senkrecht zueinander gelegenen Reihen angeordneten Stützstäben (22) besitzt, wobei der Abstand der senkrecht zueinander gelegenen Stabreihen größer als die Breite der Arme des Gabellifts (2 - 2f) und eines Gabelstaplers (21) ist.

7. Plattenlager nach Anspruch 1 und einem der Ansprüche 2 bis 6, dadurch gekennzeichnet, daß der senkrechte Abstand (a) der horizontalen Tragarmreihen (I - V) größer als die Dicke eines Plattenpakets (P) auf einer Armreihe zuzüglich der Dicke der Gabelliftarme (40) einschließlich der eine Einzelplatte erfassenden und tragenden Elementesauger (41) ist.

8. Plattenlager nach Anspruch 1 und einem der Ansprüche 2 bis 7, dadurch gekennzeichnet, daß an dem auf gleicher Höhe aller Regale gelegenen Ende eine quer zur Regallängsmittelachse (M) gelegene Gabelstaplerbahn (20) angeordnet ist.

# Fig.1

# Fig.2

# Fig.3

# Fig.4

EP 0 322 539 A1

# Fig.5

# Fig.6

# Fig.7

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 225 858  (AB KNIGHT) * Insgesamt * | 1,5,7 | B 65 G   1/04 |
| Y | | 2-4,8 | |
| | --- | | |
| D,Y | DE-A-3 111 943  (HOLSTEIN & KAPPERT) * Insgesamt * | 2 | |
| A | | 1,7 | |
| | --- | | |
| D,Y | DE-U-1 881 986  (SIEBAU) * Insgesamt * | 3,4 | |
| A | | 1 | |
| | --- | | |
| Y | EP-A-0 213 289  (OHRA) * Figur 4; Spalte 5, Zeile 7 - Spalte 6, Zeile 14 * | 8 | |
| A | | 4 | |
| | ----- | | |

**RECHERCHIERTE SACHGEBIETE (Int. Cl.4)**

B 65 G

Der vorliegende Recherchenbericht wurde für alle Patentansprüche erstellt

| Recherchenort | Abschlußdatum der Recherche | Prüfer |
|---|---|---|
| DEN HAAG | 20-03-1989 | WERNER D.M. |